# EUROPEAN PATENT APPLICATION

(11) **EP 2 196 478 A1**
(43) Date of publication of application: **16.06.2010**
(21) Application number: 08021627.8
(22) Date of filing: 12.12.2008
(51) Int. Cl.: C08B 15/05

(54) **Surface modified cellulose nanofibrils**

(71) Applicant: EMPA Eidgenössische Materialprüfungs- und Forschungsanstalt, 8600 Dübendorf (CH)
(72) Inventor: Bordeanu, Nico, 8406 Winterthur (CH); Eyholzer, Christian, 8046 Zürich (CH); Zimmermann, Tanja, 8044 Gockhausen (CH)
(74) Representative: Schmauder & Partner AG Patent- & Markenanwälte VSP

(57) **Abstract**

A process for manufacturing surface modified cellulose nanostructures comprises the step of reacting a first amount of cellulose nanostructures with a second amount of an alkoxysilane compound. Thereby, said surface modified cellulose nanofibrils are formed having a fraction α of hydroxyl functional groups present at the surface being condensed to the alkoxysilane compound. This is followed by the step of isolating said surface modified cellulose nanostructures.

## Description

### Technical field of the Invention

The present invention generally relates to the field of surface modified cellulose nanostructures.

### Background of the Invention

Native cellulose comprises chains of D-anhydroglucopyranose units bonded to one another at the [beta]-1,4 positions. The degree of polymerization of the various chains can vary from a few hundred to several thousand monomer units, depending upon the source used. In the native state, intermolecular hydrogen bonds promote a parallel association of the cellulose chains with one another to form nanostructures with a diameter varying from about 2 to about 100 nm. In general, such cellulose nanostructures having a length of about 1 µm or more are denoted "nanofibrils" whereas their shorter counterparts with a length of about 200 to 500 nm and a diameter below 10 nm are denoted as "nanowhiskers".

Nanofibrillated cellulose (NFC) consisting of cellulose nanostructures as defined above is derived from biomass and turns out to be promising for reinforcement and controlled modification of polymer matrices. It is feasible that mechanical properties of polymers and their functionality can be designed by compounding with properly processed and refined NFC. For an optimal compounding of NFC with different (bio)polymers, good fibril/matrix compatibilization is required. Due to the hydrophilic character of NFC resulting from the high number of hydroxyl groups, a good embedding within hydrophilic polymers, especially water-soluble polymers, by preservation of the network structure is readily achieved [1],

However, polymers for technical applications are mostly less hydrophilic or even hydrophobic. Thus, a major problem concerning the compounding is a bad adhesion of the hydrophilic NFC to hydrophobic polymer matrices. A poor dispersion respectively agglomeration of NFC in the polymer matrix is a consequence thereof, leading to poor mechanical properties of the resulting composite. To prevent this, the surface of NFC has to be modified accordingly in order to promote adhesion. A strong adhesion at the interface between nanofibrils and polymer matrix can lead to enhanced interaction between the components. Additionally, a strong adhesion at the interface is needed for effective transfer of stress and load distribution within the composite material.

In some studies, corona or plasma discharges have been used to promote adhesion [2, 3]. On other attempts, the adhesion of hydrophilic cellulose to hydrophobic polymer matrices has been increased by using coupling agents [4-6], surfactants [7], surface grafting or derivatization [8-10].

A further method for the preparation of hydrophobized NFC that has been described in the literature is the silylation technique. Goussé and coworkers reported on the preparation of silylated cellulose microfibrils [11, 12] and whiskers [13], especially by using etherification reagents as halogenated silane derivatives (e.g.: isopropyldimethylchlorosilane), When mild silylation conditions were applied, the microfibrils retained their morphology and could be dispersed in a non-flocculating manner into organic solvents. The suspensions of silylated cellulose microfibrils in methyl oleate presented characteristic thickening and shear thinning effects [12]. Using the same preparation procedure, Andresen et al. examined the properties of the silylated cellulose microfibrils with respect to their degree of surface silanization [14].

Wu et al. investigated the effect of fibre pretreatment on the interfacial strength and mechanical properties of wood fiber/polypropylene (WF/PP) composites. The WF/PP composite containing fibers pretreated with an acid-silane (vinyl trimethoxy silane) aqueous solution exhibits the highest tensile properties among the materials studied [15]

US 5,071,978 describes the preparation of water-soluble silanized cellulose derivatives (e.g.: of hydroxyethyl-, methylhydroxypropyl-cellulose etc.) which form after solution casting water-insoluble films. These kind of functional celluloses where used by the authors of FR 2,865,939 in bioactive coatings for implants or prosthesis. US 2005/0228174 relates to the preparation of various cellulose ether derivatives. The use of glycidyl-alkoxysilanes as etherification reagents is claimed. Thereby, the binding of the silane onto the cellulose backbone takes place via glycidyl reactive group.

Finally, US 2005/0256262 relates to a composition for coating, molding or mastic applications, which composition contains up to 4 components, one thereof being an additive component comprising surface modified cellulose microfibrils. The microfibrils were modified at the surface mainly using physical adsorption procedures (e.g.: surfactants), but also using for instance silane-terminated polyurethanes. Additionally, chemical routes such as: silylation / etherification reactions, condensation with isocyanates, alkoxylation reactions with alkylene oxides and condensation or substitution reactions with glycidyl derivatives were disclosed. For the preparation of silylated microfibrils, the authors refer to US 6,703,497 (also published as WO 00/15667 and EP 1,114,065), in which cellulose microfibrils were first transferred into an organic solvent (anhydrous toluene) by solvent exchange. The following substitution reactions were conducted mainly with chlorinated silane reagents (e.g.: chlorodimethylbutylsilane).

### Literature

[1] Zimmermann, T., Pöhler E., Schwaller, P.; Adv. Eng. Materials, 2005, 7 (12), 1156-1161.
[2] Bataille P., Ricard L., Sapieha S.; Polym. Compos. 1989; 10:103-8.
[3] Dong S., Sapieha S., Schreiber H. P.; Polym. Eng. Sci. 1993; 33:343-6.
[4] Dalväg H., Klason C., Strömvall H. E.; Int J. Polym. Mater. 1985; 11:9-38.
[5] Maldas D., Kokta B. V., Daneault C. J.; Appl. Polym. Sci. 1989; 37:751-75.
[6] Felix J.M., Gatenholm P.; J. Appl. Polym. Sci. 1991; 42:609-20.
[7] Heux L., Chauve G., Bonini C.; Langmuir 2000; 16:8210-2.
[8] Sassi J.-F., Chanzy H., Cavaille J.-Y., Fleury E.; PCT International Patent Application, published as WO 97/12917.
[9] Araki J., Wada M., Kuga S.; Langmuir 2001; 17:21-7.
[10] Cash M. J., Conner, H. T., Cowan P. J., Gelman, R. A., Lusvardi K. M., Thompson, S. A., Tise F. P.; US Patent 6,602,994,1999.
[11] Ladouce L., Fleury E., Gousse' C., Cantiani R., Chanzy H., Excoffier G.; PCT International Patent Application, published as WO 00/15667.
[12] Gousse' C., Chanzy H., Cerrada M. L., Fleury E.; Polymer 2004; 45:1569-1575.
[13] Gousse' C., Chanzy H., Excoffier G., Soubeyrand L., Fleury E.; Polymer 2002; 43:2645-2651.
[14] Andresen M., Johansson, L.-S., Tanem B. S., Stenius P.; Cellulose 2006; 13:665-677.
[15] Wu, J., Yu, D., Chan, C.-M., Kim, J., Mai, Y.-W.; J. Appl. Polymer Science 2000; 76:1000-1010.

The methods described in literature for surface modification of nanofibrillated cellulose exhibit several drawbacks, thus making them applicable only in a laboratory scale. One of the main drawbacks thereof is that prior to chemical modification, NFC generally needs to be transferred from its aqueous suspension into an organic solvent (e.g,: [11-15]). The so called solvent exchange comprises up to four steps and requires up to three different solvents (e.g.:[11]). Accordingly, the preparation of functional NFC becomes quite complicated and a complex process. Additional drawbacks of the chemical procedures disclosed so far are:
- chemical reactions often require special laboratory infrastructure and safety measures;
- reaction conditions (e.g.: temperature) are sometimes too harsh, inducing degradation of NFC and thereby a deterioration of its mechanical properties;
- isolation of the dry functional NFC from the reaction mixture (especially when the reaction milieu is organic) can be time and energy consuming; and
- reproducibility of some of the reactions is often rather poor.

Accordingly, there is a need for an improved process for manufacturing surface modified cellulose nanostructures that overcomes the above described disadvantages.

### Summary of the Invention

As used herein, the term "cellulose nanostructure" is defined as a cellulose nanostructure with a diameter varying from about 2 to about 100 nm, which includes, in particular, cellulose nanofibrils having a length of about 1 µm or more and cellulose nanowhiskers having a length of about 200 to 500 nm and a diameter below 10 nm.

According to one aspect of the present invention, there is provided a process for manufacturing surface modified cellulose nanostructures, comprising the step of reacting a first amount of cellulose nanostructures with a second amount of an alkoxysilane compound, thereby forming said surface modified cellulose nanostructures wherein a fraction α of hydroxyl functional groups present at the surface is condensed to the alkoxysilane compound, said fraction α being at least 0.05, followed by the step of isolating said surface modified cellulose nanostructures.

The process of this invention has the following advantages:
- simple preparation procedure;
- universal procedure for the introduction of a large variety of functional groups on the surface of the cellulose nanostructures, which thus can be prepared with a broad range of polarities and/or reactivities;
- simple isolation procedure; and
- economically favorable implementation.

According to another aspect of the invention, there are provided surface modified cellulose nanostructures obtainable by the process of this invention, wherein a fraction α of hydroxyl functional groups present at the surface is condensed to a trialkoxysilane compound of formula X-Si-(OR)₃ , and wherein R is methyl or ethyl and wherein X is an organofunctional group, said fraction α being at least 0.03.

The advantages of the surface modified cellulose nanostructures of this invention are directly related to the organofunctional group "X", which plays the main role in the adhesion promotion or binding. This group must be chosen very carefully to ensure maximum compatibility with the (bio)polymer matrix of interest. If "X" is a "reactive group", the bonding to the polymer matrix takes place by chemical reactions such as grafting, addition or substitution. By choosing X as a compatibility group, the adhesion between NFC and polymer matrix can be achieved by secondary forces like hydrogen bonding, acid-base interaction, entanglement or electrostatic attraction. Thus, applying the preparation and isolation procedures of this invention and using an infrastructure that is readily available at industrial level, a broad range of surface modified cellulose nanostructures with different reactive groups and/or polarities can be synthesized. Due to the simple preparation and isolation procedures, the final material can be provided at comparatively lower cost.

According to still a further aspect of this invention, there is provided a composite material comprising a polymer matrix containing surface modified cellulose nanostructures as defined above.

Dry functional surface modified cellulose nanostructures with different polarities and/or reactivities can be used to improve or tailor properties of polymers for technical applications. These properties comprise, e.g. tensile strength at break, tear strength, elongation at break, stiffness, thermal mechanical properties, thermal stability, thermal expansion, biodegradability, transparency, water-retention, moisture resistance and dying. Thus, a broad range of applications such as in coatings, adhesives/sealings (PURs, latex adhesives, silicones), filters, membranes, packaging, transportation, medicine, food or cosmetics can be envisioned.

Advantageous embodiments of the invention are defined in the dependent claims.

According to one embodiment of the process, said reacting step comprises providing said first amount of cellulose nanostructures in an aqueous suspension and mixing the same with said second amount of alkoxysilane, followed by a heat treatment at a temperature of 100 to 110°C. This embodiment, which will also be called the "slurry/suspension method" hereinbelow, may be used, for example, to prepare aminopropyl-silanized cellulose nanostructures.

According to another embodiment of the process, said reacting step comprises providing said first amount of cellulose nanostructures in dry form and suspending the same in said second amount of neat alkoxysilane, followed by mixing said suspension and a heat treatment at a temperature of 100 to 120°C. In particular, said suspending step may be effected by spraying the neat alkoxysilane into the cellulose nanostructures under agitation conditions of the latter. This embodiment, which will also be called the "dry method" hereinbelow, allows to increase the yield of silylated NFC per batch. The method may be used, for example, to prepare glycidyloxypropyl silanized NFC.

According to a further embodiment of the process, said reacting step comprises providing said first amount of cellulose nanostructures in dry form and suspending the same in a solution of said second amount of alkoxysilane in an organic solvent, followed by refluxing said solution. This embodiment, which will also be called the "dry solvent method" hereinbelow, is used especially for the preparation of silylated nanofibrils containing photoinitiator groups.

### Detailed description of the invention

For the preparation of functional silylated NFC, commercially available alkoxysilanes (Sivento Silanes, "Dynasylan" type; Evonik Degussa International AG) known as adhesion promoter and/or coupling agents were used. The properties and effects of such silanes are defined by their molecular structure

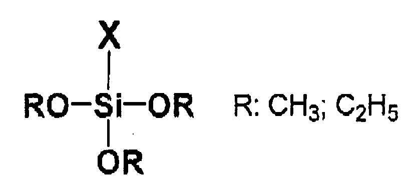

The silicon at the center is combined with two different functional groups: primarily, the organofunctional group "X" which plays the most important role in the adhesion promotion in terms of adjusting the polarity or reactivity of the NFC and secondly, the functional alkoxy groups "OR".

The bonding of the alkoxysilanes to the NFC takes place by hydrolysis of the alkoxy-group(s), followed by the condensation of the organofunctional silicon-backbone with the hydroxyl-groups on the surface of the nanofibrils:

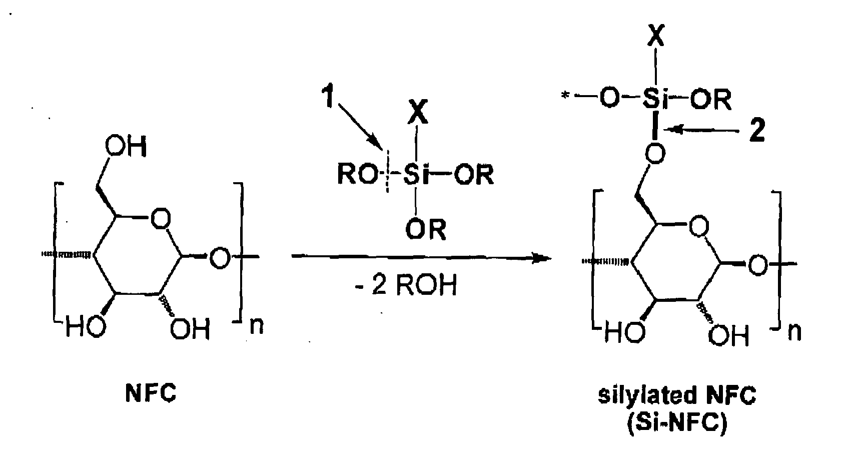

Generally, one uses a molar ratio between the silane reagent and the anhydroglucose unit (AGU) of cellulose in the NFC of about: Silane: AGU = 2 to 1.

As starting cellulose materials aqueous NFC suspensions as well as dry NFC materials were used. The NFC used in the following examples was prepared by high-shear homogenization of a commercial aqueous fibrous-fibrillar cellulose suspension (J. Rettenmaier & Söhne GmbH+Co KG, Germany).
The following preparation procedures were used.

### (I) "Slurry / suspension method"

This method consists in treating aqueous NFC suspensions with commercial "Dynasylan" silane reagents which can be water-based or dissolved in water/alcohol mixtures. Aminopropyl-silanized nanofibrils (APS-NFC) were prepared using this procedure by mixing in a first step the aqueous nanofibril suspension with the silane solution using a closed inline dispersing setup for about 30 min.

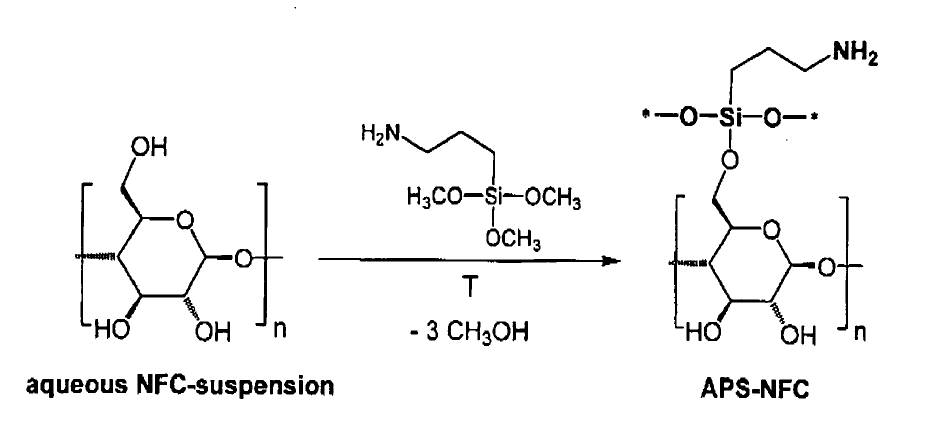

In case that the initial dry content of the aqueous NFC suspension is too low (< 2 wt.%) dewatering of the reaction mixture by centrifugation or pressing is needed prior to the activation and drying process. The activation process comprises the hydrolysis of the silane reagent and the condensation reaction onto the nanofibril surface. This process takes place during the drying process (oven, IDS dryer, fluid bed dryer, spray drying, etc.) of the wet or dehydrated reaction mixture in a temperature range between 100-110°C. By choosing an optimized stoichiometry of Silane to AGU, the evolved VOC can be easily monitored and minimized. Using this procedure, up to 300 g of dry silanized NFC material could be obtained per batch (8-9 liter).

### (II) "Dry method"

This method was developed in order to increase the yield of silylated NFC per batch. This preparation procedure consists in treating dry carboxymethylated nanofibrils (CM-NFC; degree of substitution with carboxymethyl-groups: DS_{CH2COONs} = 0.15) with the neat liquid silane using the same setup presented for the "slurry / suspension" protocol.

Glycidyloxypropyl silanized NFC (GLOPS-NFC) can be prepared using this method as follows:

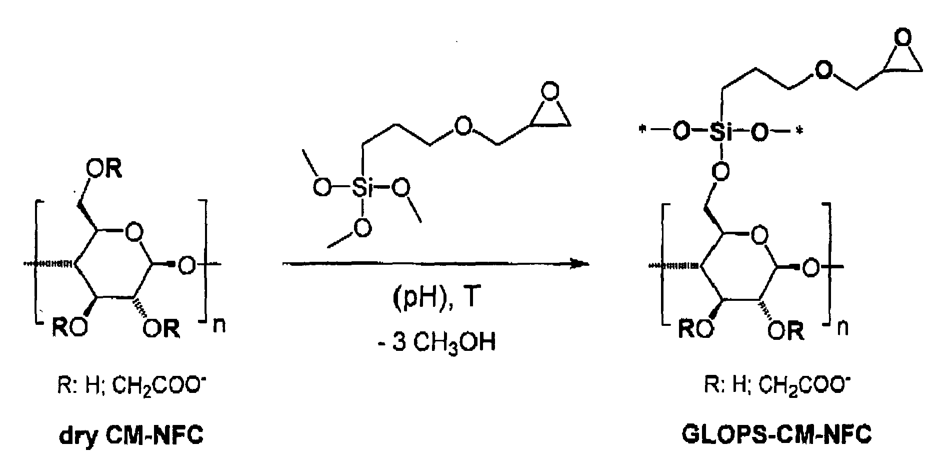

In a first step the pH of the reaction mixture was adjusted with acetic acid to a value of 3 in order to catalyze the hydrolysis of the alkoxy-groups. Such pH adjustment is needed depending on the silane reagent used in each specific case. After a homogenization time of 60 minutes, the condensation reaction was completed during the drying process at 100-110°C. By-products such as acetic acid and silicon-hydrolysates where separated off by washing with water and water/alcohol mixtures, respectively.

Alternatively to the preparation procedure using the inline dispersing system, the neat silane can be sprayed into the well agitated NFC material (e.g. by means of commonly used Twin-shell, Lödige-type or Littleford Day mixers). Typically, moisture present on the surface of the NFC is sufficient to start the hydrolysis. To bond the silane to the nanofibril surface, further heat treatment (100-120°C) is necessary. To remove by-products, solvent as alcohols (e.g.: isopropanol, ethanol are needed.

At larger scales the mixing and drying step can be carried out in a common mixer/dryer processor such as "Day Nauta Processor and Dryer", Littlerford Day Inc., USA. The final washing step at larger scales can be done using a common industrial dewatering press.

### (III) "Dry solvent method"

This method consists in the treatment of dry, optionally carboxymethylated NFC (CM-NFC) with a silane reagent in an organic solvent. This procedure is used especially for the preparation of silylated nanofibrils which contain photoinitiator groups.

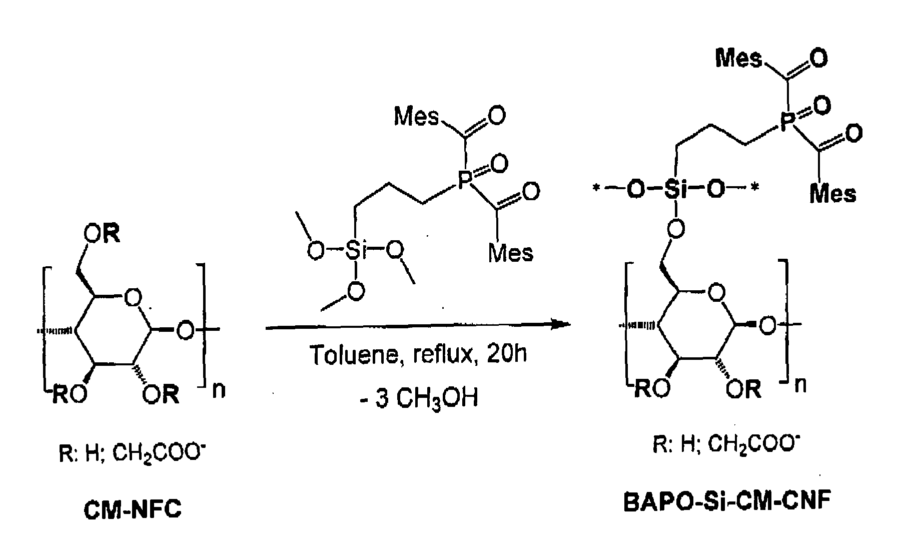

The preparation of a silylated NFC material containing BAPO (bisacylphosphine oxide) initiator groups was conducted by refluxing the dry nanofibrils in the solution of the BAPO-silane reagent dissolved in toluene for about 20 hours. The isolation of the functional nanofibrillated product consisted in washing out the unreacted BAPO with solvent, followed by drying.

### Composite materials containing surface modified NFC

By means of functional silylated cellulose nanofibrils the adhesion (by *secondary forces*) or binding (by *chemical reaction*) of NFC to a given (bio)polymer matrix can be achieved by properly choosing the organofunctional group X:

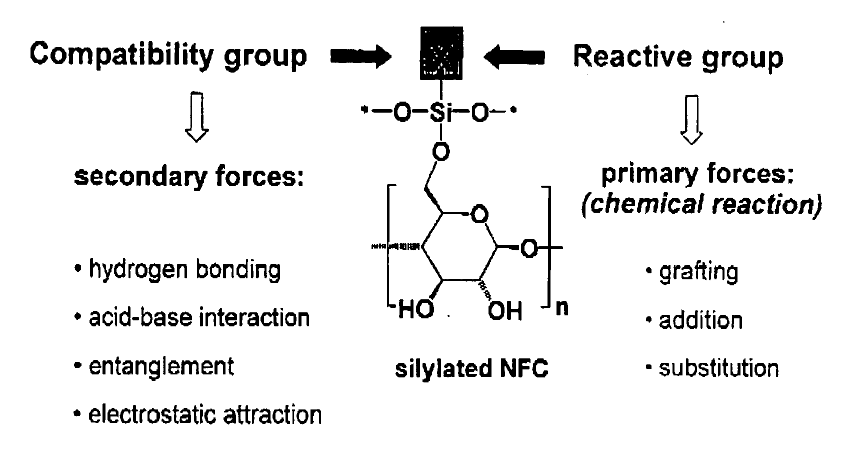

### Further remarks

While the above has been outlined with trialkoxysilane compounds of formula X-Si-(OR)₃ , it is contemplated to also use dialkoxysilane compounds having a formula X₁X₂-Si-(OR)₂ containing two reactive groups X₁ and X₂ .

### Examples

### Example 1: General preparation procedure

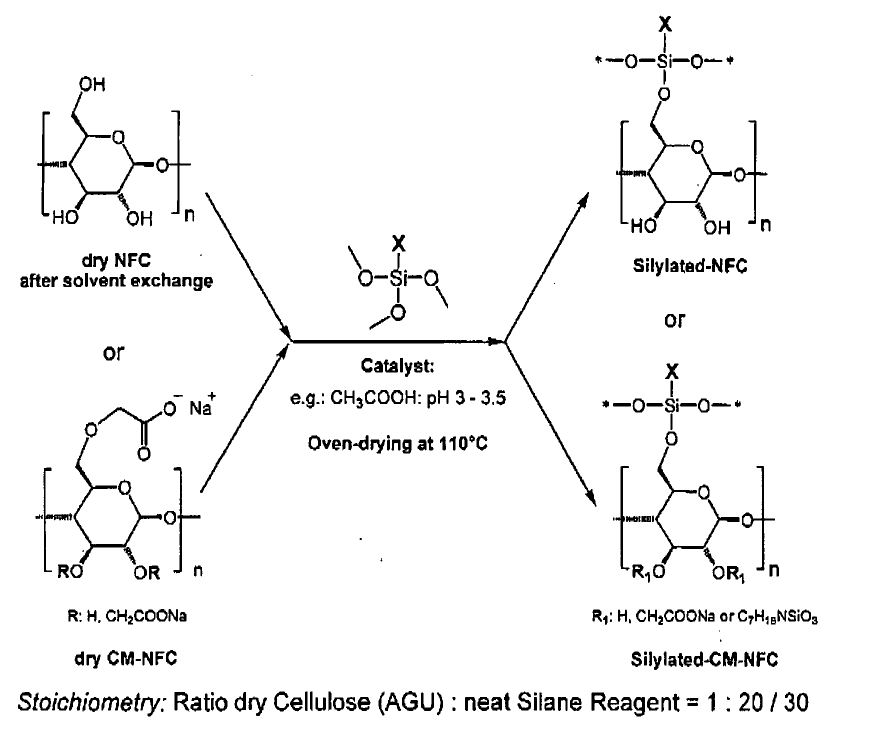

### Preparation:

In a glass beaker, dry cellulose nanofibril material (after solvent exchange or carboxymethylated) is suspended in the neat silane solution by using an Ultra-Turrax blender (30 seconds at 11'000 rpm). The glass beaker is placed in ice-water (5 to 10°C) prior to catalyst (e.g.: acetic acid, to achieve pH 3 to 3.5) addition. After pH adjustment the viscous suspension is stirred vigorously at room temperature for 60 to 120 minutes. The mixture is transferred onto a metal sheet which is covered with aluminum foil. The metal sheet is placed in an oven at 110°C. During drying cellulose material is manually mixed once in a while to avoid hornification of material and formation of chunks, respectively.

### Isolation:

The fibrous material thus obtained is washed with water until it gets neutral and afterwards with alcohol (ethanol or isopropanol) to eliminate alcoholic and silicon by-products. Before the last washing is conducted, the fibrous material is reduced to smaller homogeneous pieces by comminuting the material in isopropanol using a mortar. Finally the fibrous material is dried at 70°C.

### Example 2: General preparation procedure by spray-drying

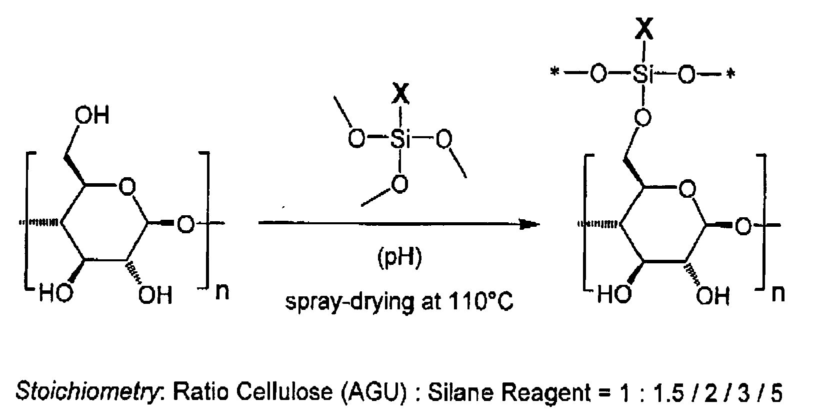

### Preparation:

The aqueous fibril suspension is transferred in an 8 Liter pilot reactor, equipped with a KPG stirrer and dropping funnel. The silane reagent is added drop wise and the suspension stirred vigorously. After addition is finished, the suspension is homogenized continuously for 60-120 minutes by using an inline dispersing system (ILD, 20.000 rpm).

Several silane reagents need a catalyst to initiate the hydrolysis of the alkoxy-groups, i.e. mostly an acid to adjust the pH of the reaction. This information is available e.g. in the data sheets of the Dynasylan silane reagents provided by Evonik Degussa. Addition of catalyst is usually accomplished after silane addition is finished.

### Isolation:

The water-based silane suspension is spray-dried at a temperature between 110-120°C. The obtained powder is washed 2-4 times with water (when inorganic catalysts are used, e.g.: acetic acid) and alcohol (ethanol or isopropanol) and oven-dried.

### Example 3: Bisacylphosphine oxide-silylated-CM-Arbocel-MFC

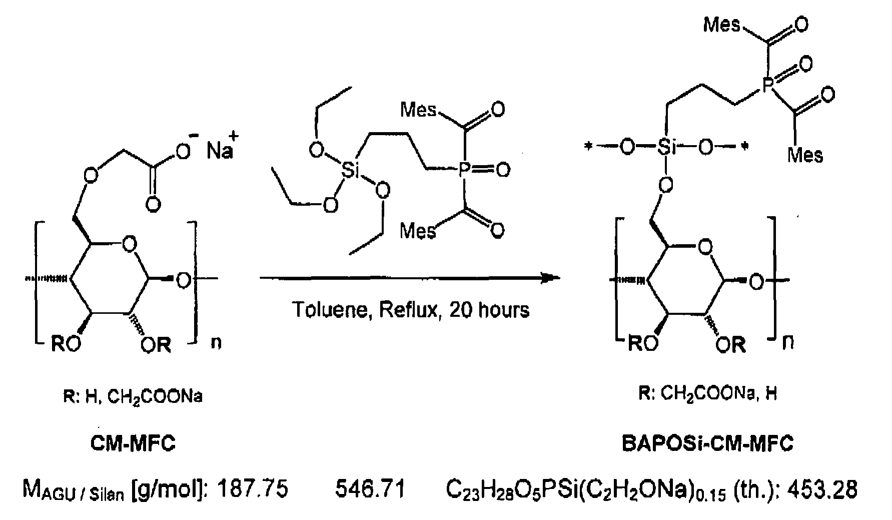

### Sample form: dry, fibrous

### Starting material:

CM-MFC (carboxymethylated beech pulp from Arbocel-MFC: = commercial Arbocel Nano B1011, Rettenmaier Co.)

### Stoichiometry:

- 1.54 g (8.20 mol) dry CM-Arbocel-MFC (DS_{CH2COONa} = 0.15)
- 1.54 g (2.82 mmol) of BAPO silane agent

### Preparation:

1.54 g (8.20 mmol) CM-MFC was suspended in 100 ml of toluene. 1.54 g (2.82 mmol) BAPO silane reagent dissolved in 50 ml of toluene was added and the mixture was refluxed for 20 hours.

### Isolation:

The mixture was filtrated and the fibrous wet material was washed with toluene. The fluffy yellowish solid was dried under high vacuum (10-3 mbar). The dry material (1.2 g, 78%) is kept under light exclusion (because of photosensitive BAPO-groups).

After evaporation of toluene and alcohol residues from the filtrate and additional drying, approx. 1.26 g residual material was isolated. This implies that approx. 280 mg of BAPO silane was bonded to the cellulose fibril surface.

### Example 4: N-(n-Sutyl)-3-aminopropylsilane-CM-Arbocel-MFC (by route 1)

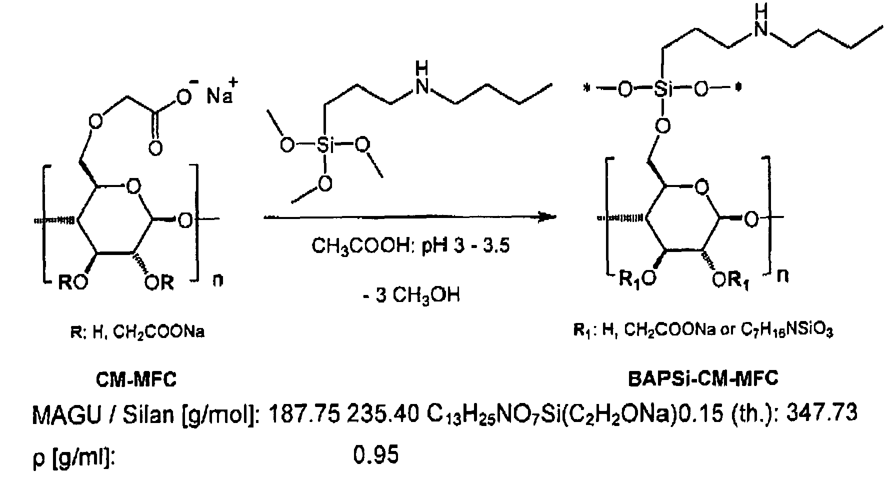

### Sample form: dry

### Starting material:

CM-MFC (carboxymethylated beech pulp from Arbocel-MFC: = commercial Arbocel Nano B1011, Rettenmaier Co.)

### Stoichiometry:

- 2.12 g (0.0113 mol) dry CM-Arbocel-MFC (DSCH₂COONa = 0.15)
- 100.02 g (0.425 mol)of BAPSi silane agent (*Dynasylan 1189:* N-(n-Butyl)-3-aminopropyl-trimethoxy silane)

### Preparation:

### 1. Acidolysis of alkoxy-groups

100.02 g (0.425 mol) of BAPSi silane agent (Dynasylan 1189) were transferred into a 300 ml glass beaker equipped with a magnetic stir bar. The beaker was placed in ice-water (15°C) prior to the acetic acid addition. 273.22 g (4.55 mol) of acetic acid (glacial) were added to the silane solution in 5 portions. Between the first three additions (1: 39.85 g; 2: 39.07 g and 3: 60.64 g) a stirring time of 10 minutes was maintained (Observation: without cooling the addition of acetic acid increases gradually the temperature of the suspension up to 60°C). After the last two additions (4: 73.40 g; 5: 60.26 g; observation: temperature of the reaction mixture: 30°C) the pH of the reaction mixture was between 3 - 3.5. The clear yellowish solution was then stirred for additional 5 hours.

### 2. Condensation reaction

Dry CM-Arbocel-MFC (DS_{CH2COONa} = 0.15; 2.12 g; 0.0113 mol) was dispersed into the hydrolyzed silane solution using an Ultra-Turrax blender (30 seconds at 11000 rpm) and stirred over night at room temperature.

### Isolation:

The yellowish suspension was firstly centrifuged to eliminate the liquid by products (hydrolyzed silane, acetic acid and methanol). The wet material was then washed 3 times with a mixture of isopropanol/water (1:1 v/v) and with water until the material gets neutral (600 ml). Finally the wet material was washed with isopropanol and oven-dried (at 70°C).

### Example 5: N-(n-Butyl)-3-aminopropylsilane-CM-Arbocel-MFC (by route 2)

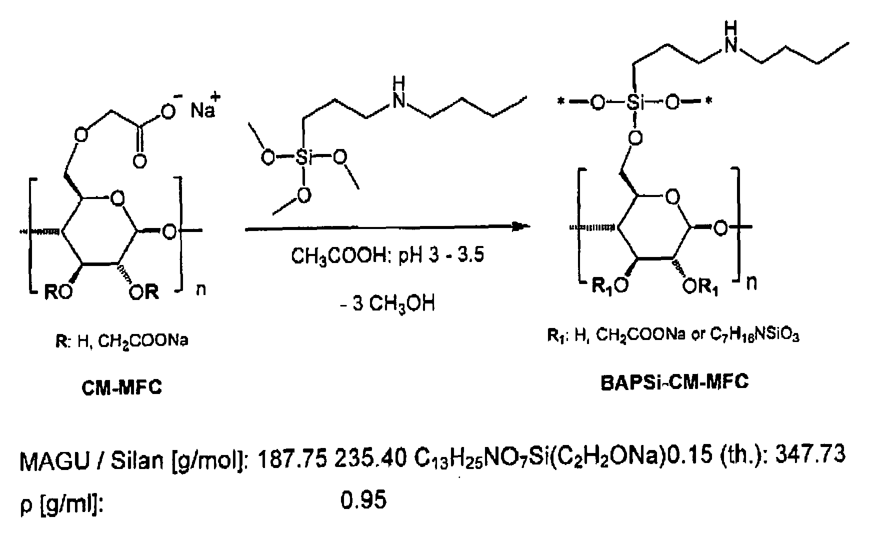

### Sample form: dry

### Starting material:

CM-MFC (carboxymethylated beech pulp from Arbocel-MFC: = commercial Arbocel Nano B1011, Rettenmaier Co.)

### Stoichiometry:

- 2.13 g (0.0113 mol) dry CM-Arbocel-MFC (DSCH₂COONa = 0.15)
- 100.01 g (0.425 mol)of BAPSi silane agent (*Dynasylan 1189:* N-(n-Butyl)-3-aminopropyl-trimethoxy silane)
- 273.93 g (4.56 mol) CH₃COOH (glacial)

### Preparation:

100.01 g (0.425 mol) of BAPSi silane agent (*Dynasylan 1189*) were transferred into a 300 ml glass beaker. 2.13 g (0.0113 mol) dry CM-Arbocel-MFC (DS_{CH2COONa} = 0.15) were suspended into the silane solution by using an Ultra-Turrax blender (30 seconds at 11000 rpm). The glass beaker was placed in ice-water prior to acetic acid addition. 273.93 g (4.56 mol) acetic acid (glacial) were added to the suspension drop wise by using a funnel (Observation: without cooling the addition of acetic acid increases the temperature of the suspension gradually up to 80°C). The final pH of the suspension was between 3 - 3.5. The yellowish suspension was stirred over night at room temperature.

### Isolation:

The yellowish suspension was firstly centrifuged to eliminate the liquid by products (hydrolyzed silane, acetic acid and methanol). The wet material was then washed 3 times with a mixture of isopropanol/water (1:1 v/v) and with water until the material gets neutral (600 ml). Finally the wet material was washed with isopropanol and oven-dried (at 70°C).

### Example 6: AminopropylArbocel-cellulose nanofibrils

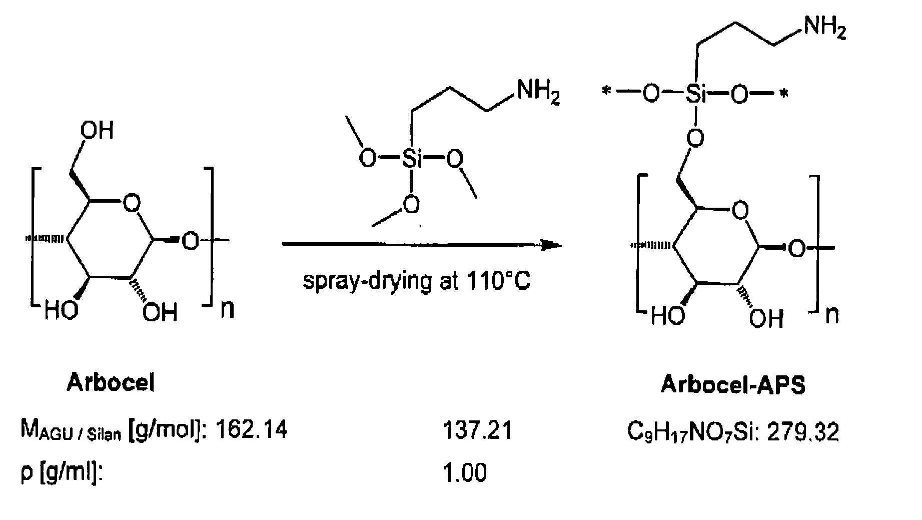

### Sample form: yellowish solid, particle-like structure

### Starting material:

Arbocel Nano MF40 (refined beech wood pulp, Rettenmaier Co.)

### Stoichiometry:

- 5000 g of a 4.00 wt. % Arbocel-suspension = 200 g dry material = 1.23 mol
- 1.5 x excess of silane agent (*Dynasylan 1151:* Aminopropyl-trimethoxy silane, 50 wt.% in water): 1.5 x 1.23 = 1.85 mol ⇒ 253.83 g (500 g ≅ 500ml Dynasylan 50 wt.% in water ⇒ 250 g neat silane)

### Preparation:

5000 g of a 4.00 wt. % water-based Arbocel-suspension (1.23 mol) were transferred in an 8 Liter pilot reactor, equipped with a KPG stirrer and dropping funnel. 500 ml (1.85 mol) *Dynasylan 1151* were added drop wise and the suspension was stirred vigorously. After addition was finished, suspension was homogenized continuously for 60 minutes by using an inline dispersing system (ILD, 20.000 rpm).

### Isolation:

The water-based silane suspension was spray-dried at Empa (*ceramic lab*). The yellowish powder was washed twice with water and isopropanol and oven-dried. 170 g (85%) of a yellowish particle-like powder was obtained.

### Example 7: N-(n-Butyl)-3-aminopropyl-silylated-Arbocel-cellulose nanofibrils

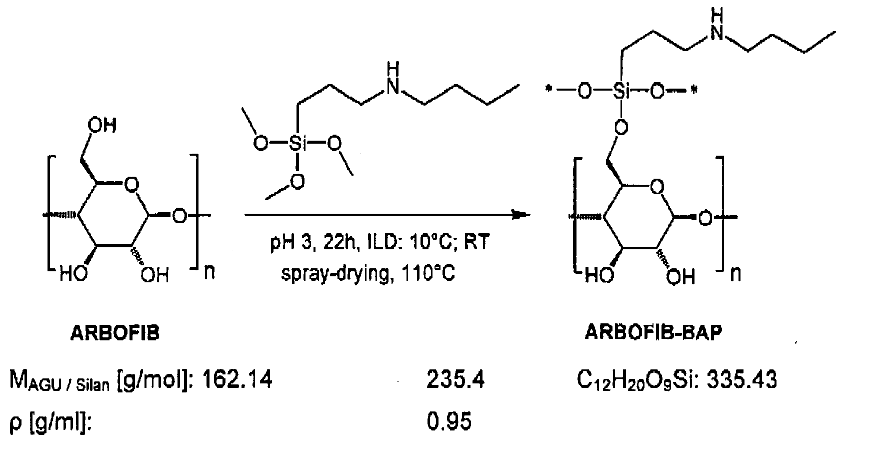

### Sample form: yellowish solid, spray-dried

*Starting material:* fibrillated *Arbocel WFGH 100 (Arbofib)*

### Stoichiometry:

- 6128.1 g of a 2.39 wt. % Arbofib-suspension = 146.46 g dry material = 0.90 mol
- 3 x excess of silane agent (*Dynasylan 1189:* N-(n-Butyl)-3-aminopropyl-trimethoxy silane): 3 x 0.90 = 2.70 mol ⇒ 635.58 g = 670 ml

### Preparation:

6128.1 g of a 2.39 wt. % water-based Arbofib-suspension (0.90 mol) were transferred in an 8 Liter pilot reactor, equipped with a KPG stirrer and two dropping funnels. The suspension was homogenized continuously for 30 minutes by using an inline dispersing system (ILD, 20.000 rpm). During the homogenization, the pH of the suspension was adjusted to 3 with concentrated acetic acid. After pH adjustment, 670ml (2.70 mol) *Dynasylan 1189* were added. To ensure a good mixing, the reaction mixture was homogenized with the ILD for 5 hours. Afterwards, the water-based suspension was stirred for further 17 hours and finally neutralized with KOH (24 wt. %) by using again the ILD system. The final concentration of the suspension was 8.2 wt. %

### Isolation:

The water-based silane suspension was spray-dried at the *Elotex* Co. The powder was afterwards washed twice with water and isopropanol and oven-dried. 78.5 g (53%) of a yellowish powder was obtained.

### Example 8: Glycidoxypropyl-silylated-Arbocel-cellulose nanofibrils

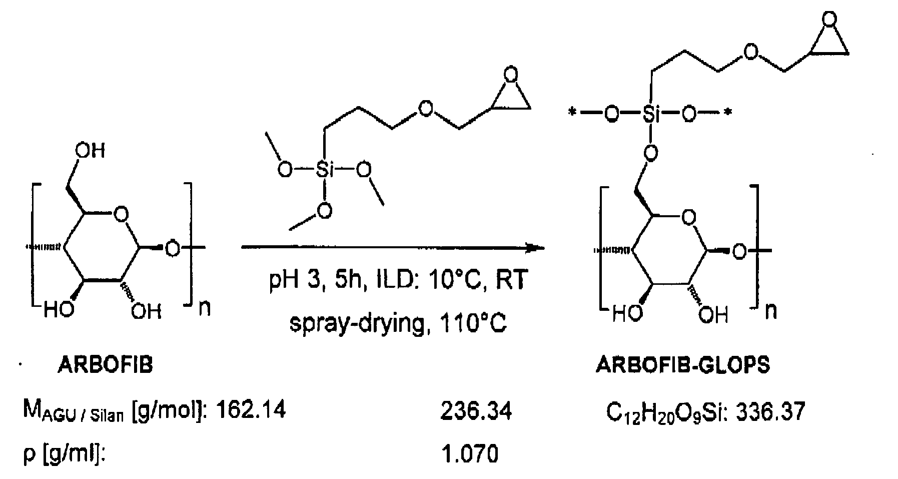

*Sample form:* white solid, spray-dried

*Starting material:* fibrillated Arbocel WFGH 100 (Arbofib)

### Stoichiometry:

- 4314.9 g of a 1.8 wt. % Arbofib-suspension = 77.67 g dry material = 0.48 mol
- 5 x excess of silane agent (*Dynasylan GLYMO:* glycidyloxypropyl-trimethoxy silane): 5 x 0.48 = 2.40 mol ⇒ 567.22 g = 530 ml

### Preparation:

4314.9 g of a 1.8 wt. % water-based Arbofib-suspension (0.48 mol) were transferred in an 8 Liter pilot reactor, equipped with a KPG stirrer and two dropping funnels. The suspension was homogenized continuously for 30 minutes by using an inline dispersing system (ILD, 20.000 rpm). During the homogenization, the pH of the suspension was adjusted to 3 with concentrated acetic acid. After pH adjustment, 530ml (2.70 mol) *Dynasylan 1189* were added. To ensure a good mixing, the reaction mixture was homogenized with the ILD for 5 hours. Afterwards, the water-based suspension was stirred for further 12 hours (over night) and finally neutralized with KOH (24 wt. %) by using again the ILD system. The final concentration of the suspension was 6.7 wt. %.

### Isolation:

The water-based silane suspension was spray-dried at the *Elotex* Co. The powder was afterwards washed twice with water and isopropanol and oven-dried. 25.3 g (33%) of a white powder was obtained.

### Example 9: Aminopropyl-Vitacel-cellulose nanofibrils

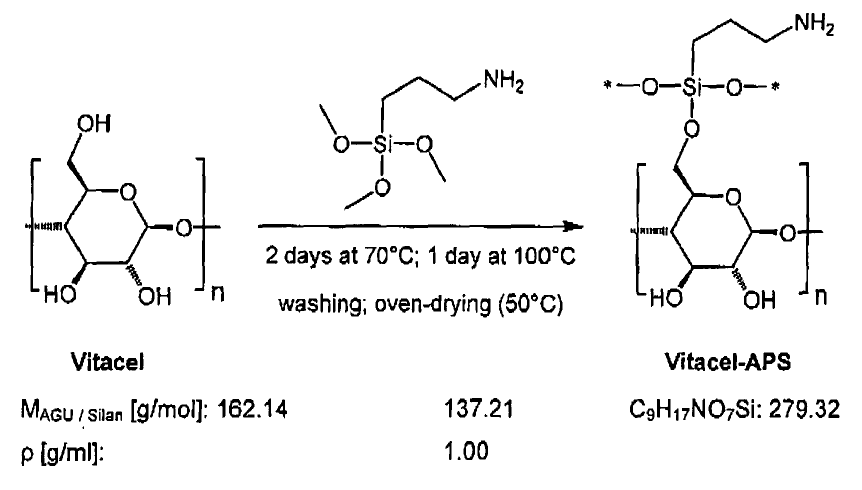

### Sample form: yellowish solid, fibrous

*Starting material:* refined Vitacel WFGHS 100 (wheat straw pulp, Rettenmaier Co.)

### Stoichiometry:

- 600 g of a 6.00 wt. % Vitacel-suspension = 36 g dry material = 0.22 mol
- 1.5 x excess of silane agent (*Dynasylan 1151:* Aminopropyl-trimethoxy silane, 50 wt.% in water): 1.5 x 0.22 = 0.33 mol ⇒ 45.28 g (100 g ≅ 100ml Dynasylan 50 wt.% in water ⇒ 50 g neat silane)

### Preparation:

600 g of a 6.00 wt. % water-based Vitacel-suspension (0.22 mol) were transferred in a 1 Liter glass reactor equipped with a KPG stirrer, dropping funnel and reflux condenser. 50 ml *Dynasylan 1151* were added drop wise to the Vitacel-suspension. During the silane addition vigorous stirring was ensured. After addition of silane was finished, reaction mixture was stirred vigorously additionally 15 minutes. The second addition of 50 ml Dynasylan was accomplished in the same way as described for the first addition. The reaction mixture was then stirred for 2 days at 70°C and an additional day at 100°C.

### Isolation:

The yellowish suspension was dewatered by centrifugation and washed twice with isopropanol in order to eliminate by-products as silane hydrolysates and methanol. The wet cake was oven-dried at 50°C to yield 30 g (83%) of a yellowish fibrous material.

### Example 10: Aminopropyl-Vitacel-cellulose nanofibrils by oven-drying method

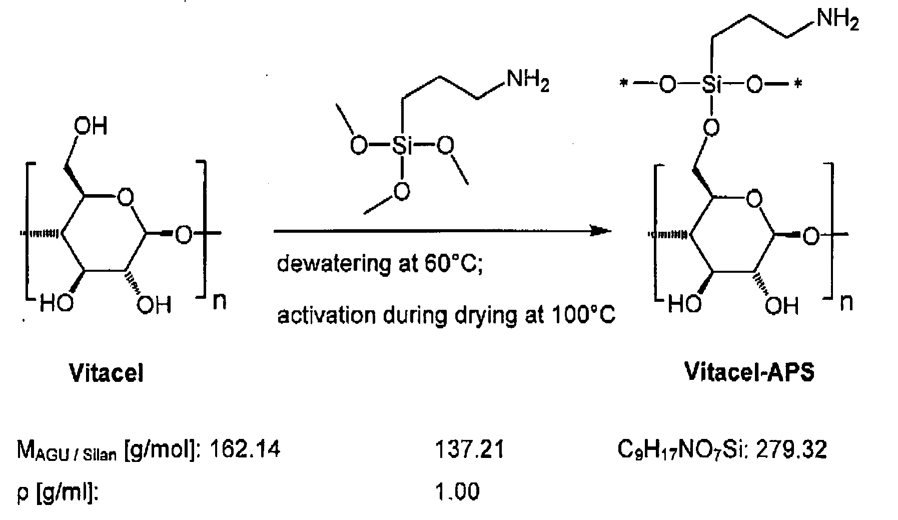

### Sample form: yellowish solid, fibrous

*Starting material:* refined Vitacel WFGHS 100 (wheat straw pulp, Rettenmaier Co.)

### Stoichiometry:

- 600 g of a 6.00 wt. % Vitacel-suspension = 36 g dry material = 0.22 mol
- 1.5 x excess of silane agent (*Dynasylan 1151:* Aminopropyl-trimethoxy silane, 50 wt.% in water): 1.5 x 0.22 = 0.33 mol ⇒ 45.28 g (100 g ≅ 100ml Dynasylan 50 wt.% in water ⇒ 50 g neat silane)

### Preparation:

600 g of a 6.00 wt. % water-based Vitacel-suspension (0.22 mol) were transferred in a 1 Liter glass reactor equipped with a KPG stirrer and dropping funnel. 50 ml Dynasylan 1151 were added drop wise to the Vitacel-suspension. During the silane addition vigorous stirring was ensured. After addition of silane was finished, reaction mixture was stirred vigorously additionally 15 minutes. The second addition of 50 ml Dynasylan was accomplished in the same way as described for the first addition. The final reaction mixture was then stirred vigorously 3 hours at room temperature.

### Isolation:

The aqueous suspension was transferred onto a metal sheet which was covered with aluminum foil. The metal sheet was placed in an oven at 60°C. During the dewatering process the silane grafted cellulose material was manually mixed once in a while to avoid hornification and formation of chunks, respectively. Finally, the activated silane condensation was completed by drying the wet fibrous material (moisture content between 5 and 10 wt. %) at 100-110°C in an oven (if possible under vacuum). The obtained yellowish fibrous material was washed 3 times with isopropanol. Before the last washing was conducted, the fibrous material was reduced to smaller homogeneous pieces by comminuting the material in isopropanol using a mortar. After drying, 34 g (94%) of a yellowish material with fibrous consistency was obtained.

### Example 11: Application in adhesive

By dispersing dry APS-silylated NFC in a polyol mixture (Polypropylenglycol mixture 1:1(by volume):Desmophen 1111 BD and 5132 W, respectively; BASF AG, Germany) a NFC-reinforced one-component polyurethane adhesive (1c-PUR) was synthesized. The final concentration of NFC was regularly 2.5%, the highest achieved concentration: 4.1%. No appreciable chemical changes in the PUR composition were observed: the NCO content remained unaltered. Additionally, the adhesive showed a long-term stability: no sedimentation of the silanized NFC took place.

Investigations of the rheological behaviour showed a pseudo-plastic behaviour of the PUR containing the APS-NFC. This pseudo-plastic behaviour is desirable for the preparation of wood based composites, because it makes easier the spreading of the adhesives on the wood surface.

Shear tests on laminated timber glued with this NFC-reinforced adhesive were conducted according to EN 392. In particular, the shear strength increased by a factor of 3 compared to the unfilled adhesive after moisture impact (A4 treatment).

### Example 12: NFC containing composites

Dry APS-modified NFC was successfully compounded with polylactid acid (PLA) by extrusion, without the need of an additional compatibilizer or additive. No agglomeration of the NFC in the PLA could be observed after the extrusion. The concentration of APS-NFC in the final bio-nanocomposite was about 4 wt.%.

From the homogeneous nanocomposite pellets thus prepared, films were obtained by hot pressing.

## Claims

1. A process for manufacturing surface modified cellulose nanostructures, comprising the step of reacting a first amount of cellulose nanostructures with a second amount of an alkoxysilane compound, thereby forming said surface modified cellulose nanofibrils wherein a fraction α of hydroxyl functional groups present at the surface is condensed to the alkoxysilane compound, said fraction α being at least 0.03, followed by the step of isolating said surface modified cellulose nanostructures.

2. The process according to claim 1, wherein said alkoxysilane is a trialkoxysilane compound of formula X-Si-(OR)₃, wherein R is methyl or ethyl and wherein X is an organofunctional group.

3. The process according to claim 3, wherein X is selected from the group consisting of:
-CH₃
-GH₃-(CH₂)ₙ-CH₂F
-CH₂-(CH₂)ₙ-CH₃
phenyl
vinyl
N-(n-butyl)-3-aminopropyl
3-aminopropyl
3-aminopropylmethyl
N-benzyl-N-(2-aminoethyl)-3-aminopropyl
N-(2-aminoethyl)-3-aminopropylmethyl
3-mercaptopropyl
3-ureidopropyl
3-methacryloxypropyl
N-benzyl-N-(2-aminoethyl)-3-aminopropyl
3-glycidyloxypropyl
polyethylene glycol
polypropylene glycol and
bisacylphosphine oxide.

4. The process according to one of claims 1 to 3, wherein said reacting step comprises providing said first amount of cellulose nanostructures in an aqueous suspension and mixing the same with said second amount of alkoxysilane, followed by a heat treatment at a temperature of 100 to 110°C.

5. The process according to one of claims 1 to 3, wherein said reacting step comprises providing said first amount of cellulose nanostructures in dry form and suspending the same in said second amount of neat alkoxysilane, followed by mixing said suspension and a heat treatment at a temperature of 100 to 120°C.

6. The process according to claim 5, wherein said suspending step is accomplished by spraying the neat alkoxysilane into the cellulose nanostructures under agitation conditions of the latter.

7. The process according to one of claims 1 to 3, wherein said reacting step comprises providing said first amount of cellulose nanostructures in dry form and suspending the same in a solution of said second amount of alkoxysilane in an organic solvent, followed by refluxing said solution.

8. Surface modified cellulose nanostructures obtainable by the process according to claim 2, wherein a fraction α of hydroxyl functional groups present at the surface is condensed to a trialkoxysilane compound of formula X-Si-(OR)₃, wherein R is methyl or ethyl and wherein X is an organofunctional group, said fraction α being at least 0.03.

9. Surface modified cellulose nanostructures according to claim 8, wherein X is selected from the group consisting of
-CH₃
-CH₂-(CH₂)ₙ-CH₂F
-CH₂-(CH₂)ₙ-CH₃
phenyl
vinyl
N-(n-butyl)-3-aminopropyl
3-aminopropyl
3-aminopropylmethyl
N-benzyl-N-(2-aminoethyl)-3-aminopropyl
N-(2-aminoethyl)-3-aminopropylmethyl
3-mercaptopropyl
3-ureidopropyl
3-methacryloxypropyl
N-benzyl-N-(2-aminoethyl)-3-aminopropyl
3-glycidyloxypropyl
polyethylene glycol
polypropylene glycol and
bisacylphosphine oxide.

10. A composite material, comprising a polymer matrix containing surface modified cellulose nanostructures according to claim 8 or 9.
